# EUROPEAN PATENT APPLICATION

(11) **EP 4 365 569 A1**
(43) Date of publication of application: **08.05.2024**
(21) Application number: 22205105.4
(22) Date of filing: 02.11.2022
(51) Int. Cl.: G01N 15/00, G01N 15/02

(54) **APPARATUS FOR AND METHOD OF CHARACTERISING PARTICLES**

(71) Applicant: Malvern Panalytical Limited, Malvern, Worcestershire WR14 1XZ (GB)
(72) Inventor: Latunde-Dada, Seyi, Malvern, WR14 1XZ (GB)
(74) Representative: Barker Brettell LLP

(57) **Abstract**

The present invention provides an apparatus (10) for characterising particles using nanoparticle tracking analysis (NTA). The apparatus (10) comprises: a flow cell (101) for containing a sample comprising a plurality of particles suspended in a fluid; a pump (102) configured to provide a flow of the sample through the flow cell (101); a light source (103) configured to illuminate the sample; an imaging system (104) configured to collect light scattered or fluoresced by particles moving within the flow cell (101) and within a detection region of the imaging system (104), and capture a video of the particles moving within the detection region; and a computer (105) configured to process the video. The computer (105) is configured to determine an estimated flow velocity of the sample through the flow cell (101). Determining the estimated flow velocity comprises performing 1-dimensional particle tracking in a direction perpendicular to an expected flow direction of the sample.

## Description

### TECHNICAL FIELD

The present invention relates to an apparatus for and a method of characterising particles using nanoparticle tracking analysis.

### BACKGROUND

Nanoparticle tracking analysis (NTA) is a method of characterising particles suspended in a fluid by tracking the movement of individual particles and determining the size of the particles based on their Brownian motion. Typically, the method comprises illuminating a sample comprising a plurality of particles suspended in a fluid, collecting light scattered or fluoresced by the particles, and capturing a video of the particles as they move within the fluid. The fluid may be a liquid (e.g. water, or some other liquid), or may be a gas (e.g. air). The video is analysed frame-by-frame to track the movement of the particles. The displacement of the particles, caused by Brownian motion, between frames of the video is determined and used to determine the size of the particles using Fick's second law of diffusion and the Stokes-Einstein equation.

During NTA, it is desirable to provide a flow of the sample. This may improve the accuracy of measurements as more of the sample is moved through a detection region of the apparatus used to carry out the analysis and the measurements are less likely to be dominated by anomalies. Very large or very small particles, or contaminants will be swept from the field of view of the video by the flow of the sample. However, providing a flow presents a problem in accurately tracking the particles and determining the proportion of the displacement of the particles that is a result of the flow of the sample and the portion that is a result of Brownian motion. These problems become more significant as the flow rate and concentration of a sample increase. It can also be difficult to determine when the accuracy of particle tracking falls below an acceptable level as the flow rate or concentration of a sample increase.

A known NTA process may comprise: performing 2-dimensional particle tracking, for example by identifying a particle from a current frame of a video in a subsequent frame of the video as the Euclidean nearest particle in the subsequent frame; estimating a sample flow velocity from an average distance that particles tracked by the 2-dimensional particle tracking move between subsequent frames of the video; correcting for drift of the particles based on the estimated flow velocity; determining the distance travelled by the particles due to Brownian motion after correcting for drift; and determining the size of the particles based on the distances travelled due to Brownian motion. The 2-dimensional particle tracking may result in unacceptable errors in identifying particles in subsequent frames of the video, which will ultimately compromise the accuracy of the particle size measurements.

### SUMMARY

A first aspect of the invention provides an apparatus for characterising particles using nanoparticle tracking analysis (NTA). The apparatus comprises: a flow cell for containing a sample comprising a plurality of particles suspended in a fluid; a pump configured to provide a flow of the sample through the flow cell; a light source configured to illuminate the sample; an imaging system configured to collect light scattered or fluoresced by particles moving within the flow cell and within a detection region of the imaging system, and capture a video of the particles moving within the detection region; and a computer configured to process the video to determine an estimated flow velocity of the sample through the flow cell. Determining the estimated flow velocity of the sample through the flow cell comprises performing 1-dimensional particle tracking in a direction perpendicular to an expected flow direction of the sample.

As referred to herein, particle tracking is the process of identifying the same particle within subsequent frames of the video. For example, a given particle may be identified within a current frame of the video and particle tracking may be used to identify that same given particle within a subsequent frame of the video. A subsequent frame is a frame that occurs after the current frame. In some embodiments, the particle tracking will be "per-frame", so that the subsequent frame is always the next frame from the current frame, but this is not essential. For example, particles can be tracked every other frame, or every third frame, etc.

It will be appreciated that a direction perpendicular to an expected flow direction of the sample is not limited to a direction which is exactly 90 degrees to the expected flow direction. The skilled person will appreciate that in practice there will be tolerances in selecting a direction in which to perform the 1-dimensional particle tracking.

The 1-dimensional particle tracking may comprise identifying a particle from a current frame of the video in a subsequent frame of the video. Identifying the particle in the subsequent frame of the video may comprise identifying the nearest particle in the subsequent frame in a tracking direction (regardless of the proximity of a particle in any other direction, e.g., the expected direction of flow of the sample). The tracking direction may be perpendicular to the expected flow direction of the sample.

The 1-dimensional particle tracking may be carried out on stored video, after the video has been captured. Alternatively, the 1-dimensional particle tracking may be carried out as the video is being captured.

Performing 1-dimensional particle tracking in a direction perpendicular to an expected flow direction of the sample may reduce errors in identifying a particle from a current frame of the video in a subsequent frame of the video compared to other particle tracking techniques due to bulk flow not being present in this direction, therefore mis-identification from a second particle moving to a position in a subsequent frame which is very close to a first particle's position in a preceding frame is reduced since the particles will be moving less in the direction perpendicular to the flow. This improved identification may improve an estimate of the flow velocity of the sample which can be used to correct for drift of the particles due to the flow. This in turn may improve the accuracy of determining the distance travelled by the particles due to Brownian motion and hence improve the accuracy of determining the size of the particles using the Stokes-Einstein equation.

Identifying the nearest particle in the subsequent frame may comprise identifying the nearest particle within a 1-dimensional tracking distance limit. The 1-dimensional tracking distance limit may be determined from the video. Determining the 1-dimensional tracking distance limit may comprise performing 1-dimensional particle tracking in a tracking direction on a subset of frames of the video without a tracking distance limit and determining an average distance the particles move between successive frames of the video in the tracking direction. The average distance the particles move may be used to determine the tracking distance limit. The average may be the median. The tracking distance limit may, for example, be two times the median or the median +/- 3 standard deviations.

Setting a tracking distance limit minimises the number of potential nearest particles in the subsequent frame. This minimises the number of particles in the subsequent frame for which a distance from the particle in the current frame is required to be determined in order to determine the nearest particle in the subsequent frame. This advantageously increases processing speed and minimises consumption of processing resources.

The estimated flow velocity may be determined from an average distance that particles tracked by the 1-dimensional particle tracking move between frames of the video. The distance that particles move between successive frames of the video may be measured in two dimensions (this may accommodate, for example, the case where the camera is not perfectly aligned relative to the flow cell).

The estimated flow velocity may be determined from an average distance that particles tracked by the 1-dimensional particle tracking move between successive frames of all the frames of the video or a proper subset of the frames of the video, a proper subset of the frames of the video being a subset of the frames of the video including fewer than all of the frames of the video. The flow of the sample may be assumed to be uniform across a detection region of the imaging system in which case the estimated flow velocity can be determined from an average distance that particles tracked by the 1-dimensional particle tracking move between successive frames of a true subset of the frames of the video.

The average may be the median. The median may be more robust against errors in identifying particles in subsequent frames of the video than other averages. As discussed above, performing 1-dimensional particle tracking in a direction perpendicular to an expected flow direction of the sample may reduce (but not necessarily, completely, eliminate) errors in identifying particles in subsequent frames of the video.

In other embodiments, the average may be the mean. Using the mean may provide a more accurate estimate of flow velocity where errors in identifying particles in subsequent frames of the video are known to be below an acceptable limit.

The computer may be configured to: use the estimated flow velocity to determine corrected positions of particles in which the estimated flow velocity component of movement of the particles is removed; perform 2-dimensional particle tracking of the corrected positions of the particles; and determine a residual flow velocity from an average distance that particles tracked by the 2-dimensional particle tracking of the corrected positions move between subsequent frames of the video.

Performing 2-dimensional particle tracking may comprise identifying a particle from the current frame in the subsequent frame as the particle at the shortest Euclidean distance from a position of the particle in the current frame.

The computer may be configured to determine a residual-corrected track for each particle, comprising correcting the 2-dimensional particle tracking of the corrected positions of the particles to remove the residual flow velocity.

The computer may be configured to determine particle size from an average distance that particles move between subsequent frames of the video obtained from the residual-corrected tracks.

The computer may be configured to determine the mean squared displacement of particles from the average distance that particles move between subsequent frames of the video obtained from the residual-corrected tracks. The computer may be configured to determine the diffusion coefficient of the particles from the mean squared displacement. The computer may be configured to determine particle size from the diffusion coefficient using the Stokes-Einstein equation. The diffusion coefficient of the particles can be obtained from the mean squared displacement using Fick's laws of diffusion.

The 2-dimensional particle tracking of the corrected positions may comprise identifying a particle from a current frame of the video in a subsequent frame of the video. This may comprise identifying the nearest particle in the subsequent frame. The nearest particle may be selected from those within a 2-dimensional tracking distance limit.

The 2-dimensional tracking distance limit may be determined responsive to movements of the particles tracked by the 1-dimensional tracking. For example, the 2-dimensional tracking distance limit may be determined based on a median distance particles move while tracked by 1-dimensional tracking. Setting a 2-dimensional tracking distance limit provides similar advantages as setting a 1-dimensional tracking distance limit as described above.

The computer may be configured to produce a measurement warning if the estimated flow velocity, and/or, where applicable, the residual flow velocity, exceeds a predetermined threshold. The estimated flow velocity or residual flow velocity exceeding a predetermined threshold may be an indication that the accuracy of particle size measurements obtained using the apparatus is below an acceptable level.

The computer may be configured to determine a particle concentration of the sample. The computer may be configured to produce a measurement warning if the particle concentration exceeds a predetermined threshold. The particle concentration exceeding a predetermined threshold may be an indication that the accuracy of particle size measurements obtained using the apparatus is below an acceptable level.

A second aspect of the invention provides a method for determining an estimated flow velocity of a sample during a nanoparticle tracking analysis, comprising:
providing a flow of the sample through a flow cell, the sample comprising a plurality of particles suspended in a fluid;
illuminating the sample with a light source;
collecting light scattered or fluoresced by particles moving within the flow cell and within a detection region of the imaging system;
capturing a video of the particles moving within the detection region; and
processing the video to determine an estimated flow velocity of the sample through the flow cell, wherein determining the estimated flow velocity of the sample comprises performing 1-dimensional particle tracking in a direction perpendicular to an expected flow direction of the sample.

Performing the 1-dimensional particle tracking may comprise identifying a particle from a current frame of the video in a subsequent frame of the video. Identifying the particle in the subsequent frame of the video may comprise identifying the nearest particle in the subsequent frame in a tracking direction (regardless of any separation in any other direction). The tracking direction may be perpendicular to the expected flow direction of the sample.

Identifying the nearest particle in the subsequent frame may comprise identifying the nearest particle within a 1-dimensional tracking distance limit.

The estimated flow velocity may be determined from an average distance that particles tracked by the 1-dimensional particle tracking move between subsequent frames of the video. The distance may be measured in two dimensions.

The estimated flow velocity may be determined from an average distance that particles tracked by the 1-dimensional particle tracking move between subsequent frames of all the frames of the video or a true subset of the frames of the video.

The average may be the median. In other embodiments, the average may be the mean.

The method may comprise: using the estimated flow velocity to determine corrected positions of particles in which the estimated flow velocity component of movement of the particles is removed; performing 2-dimensional particle tracking of the corrected positions of the particles; and determining a residual flow velocity from an average distance that particles tracked by the 2-dimensional particle tracking of the corrected positions move between subsequent frames of the video.

Performing 2-dimensional particle tracking may comprise identifying a particle from the current frame in the subsequent frame as the particle at the shortest Euclidean distance from a position of the particle in the current frame.

The method may comprise determining a residual-corrected track for each particle, comprising correcting the 2-dimensional particle tracking of the corrected positions of the particles to remove the residual flow velocity.

The method may comprise determining particle size from an average distance that particles move between subsequent frames of the video obtained from the residual-corrected tracks.

The method may comprise determining the mean squared displacement of particles from the average distance that particles move between subsequent frames of the video obtained from the residual-corrected tracks, determining the diffusion coefficient of the particles from the mean squared displacement, and determining particle size from the diffusion coefficient using the Stokes-Einstein equation.

The 2-dimensional particle tracking of the corrected positions may comprise identifying a particle from a current frame of the video in a subsequent frame of the video. This may comprise identifying the nearest particle in the subsequent frame within a 2-dimensional tracking distance limit.

The 2-dimensional tracking distance limit may be determined responsive to movements of the particles tracked by the 1-dimensional tracking.

The method may comprise producing a measurement warning if the estimated flow velocity, and/or, where applicable, the residual flow velocity, exceeds a predetermined threshold.

The method may comprise determining a particle concentration of the sample. The method may comprise producing a measurement warning if the particle concentration exceeds a predetermined threshold.

It will be appreciated that any optional feature, alternative or advantage applicable to the first aspect of the invention may also be applicable to the second aspect of the invention (and vice versa)

Although embodiments of the invention are described herein with reference to NTA, it will be appreciated that methods and techniques according to embodiments of the invention may be applicable to any suitable means of particle characterisation which involves tracking single particles.

### BREIF DESCRIPTION OF DRAWINGS

Embodiments of the invention will now be described, by way of example only, with reference to the accompanying drawings:
Figure 1 shows a current frame and a subsequent frame of a video and illustrates how 2-dimensional particle tracking is used in a known NTA process to determine a distance travelled by a particle within a sample due to Brownian motion;
Figures 2a and 2b show a current frame and a subsequent frame of a video and illustrate how 2-dimensional tracking can be used in NTA to determine a distance travelled by a particle within a sample due to Brownian motion when a flow is introduced into the sample;
Figures 3a and 3b show a current frame and a subsequent frame of a video and illustrate how errors can be introduced when 2-dimensional tracking is used in NTA and a flow is introduced into a sample;
Figure 4 shows an apparatus for characterising particles using nanoparticle tracking analysis according to an embodiment of the invention;
Figures 5a and 5b show a current frame and a subsequent frame of a video and illustrates how 1-dimensional particle tracking in a direction perpendicular to an expected flow direction of a sample is performed in accordance with embodiments of the invention;
Figure 6 shows a current frame and a subsequent frame of a video and illustrates how illustrates how corrected positions of particles within a frame of a video are determined in which the estimated flow velocity component of movement of the particles is removed;
Figure 7 shows the subsequent frame of Figure 6 and illustrates how 2-dimensional particle tracking of the corrected positions of the particles is performed; and
Figure 8 shows a residual correct track of a particle.

### DETAILED DESCRIPTION

A typical NTA process comprises illuminating a sample, collecting light either scattered or fluoresced by particles moving within the sample, and capturing a video of the moving particles. The video is then processed to identify particles within each frame of the video, which show up as bright spots of light. Individual particles are then identified in each frame of the video and the movement of each particle between frames of the video is tracked. The distance travelled by each particle can then be determined from the number of pixels separating the particle between frames of the video and the size of the pixels known from the specification of the camera used to capture the video.

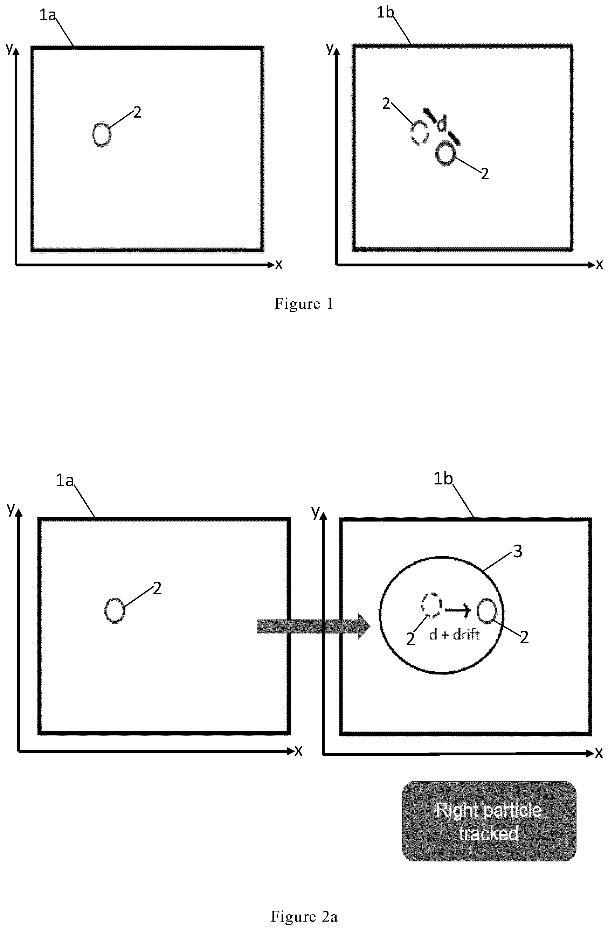

Figure 1 illustrates how 2-dimensional particle tracking is used in a known NTA process to determine a distance travelled by a particle within a sample due to Brownian motion. Figure 1 shows a current frame 1a of a video and a subsequent frame 1b of the video. A particle 2 is shown in the current frame 1a and in the subsequent frame 1b. The position of the particle 2 in the current frame 1a is shown in the subsequent frame 1b using a broken line. The particle 2 is identified in the subsequent frame 1b using 2-dimensional particle tracking. Between the frames 1a, 1b the particle 2 has travelled in two dimensions, i.e. in the x-direction and in the y-direction as defined by the axes in Figure 1. The particle 2 is identified in the subsequent frame 1b as the Euclidean nearest particle to the position of the particle 2 in the current frame 1a.

The Euclidean distance 'd' the particle 2 has moved between the frames 1a, 1b is taken as the distance the particle 2 has moved due to Brownian motion. The process is repeated over any suitable number of frames of the video to determine a total distance moved by the particle 2 due to Brownian motion. The total distance can then be used to determine the size of the particle 2 using the Stokes-Einstein equation in a known manner. In practice, this process is carried out for each of a plurality of particles within the sample to determine the size of the particles. For a polydisperse sample a size distribution may be determined, and for a monodisperse sample, an average particle size (e.g. Dv50) may be determined.

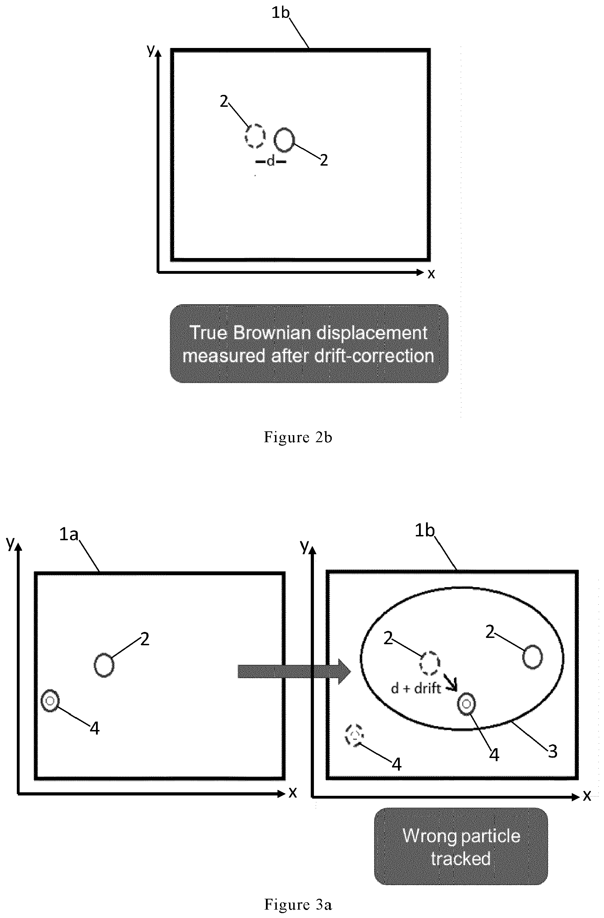

When a flow is introduced into a sample, the distance travelled by the particles within the sample will have a first component resulting from Brownian motion and a second component resulting from the flow of the sample. Therefore, in order to reliably determine the distance travelled by the particles due to Brownian motion, for the purpose of determining the size of the particles, the distance travelled by the particles due to the flow of the sample must be taken into account. Figures 2a and 2b illustrate how 2-dimensional tracking can be used in NTA to determine a distance travelled by a particle within a sample due to Brownian motion when a flow is introduced into the sample. In the example of Figures 2a and 2b, the flow rate of the sample is relatively low, for example.

Figure 2a illustrates a current frame 1a of a video and a subsequent frame 1b of the video. A particle 2 is shown in the current frame 1a and in the subsequent frame 1b. The position of the particle 2 in the current frame 1a is shown in the subsequent frame 1b using a broken line. The particle 2 is identified in the subsequent frame 1b as the Euclidean nearest particle to the position of the particle 2 in the current frame 1a within a tracking distance limit 3. The tracking distance limit 3 may be predetermined in order to maximise the efficiency of identifying the particle 2 in the subsequent frame 1b. The Euclidean distance the particle 2 has moved between the frames 1a, 1b is taken as the sum of the Brownian motion component 'd' and the flow component 'drift' of the distance moved by the particle 2.

Figure 2b shows a corrected position of the particle 2 in the subsequent frame 1b with the flow component of the distance moved by the particle 2 removed. The position of the particle 2 in the current frame 1a is shown in the subsequent frame 1b using a broken line. The Euclidean distance 'd' the particle 2 has moved from its position in the current frame 1a to its corrected position in the subsequent frame 1b is taken as the distance the particle 2 has moved due to Brownian motion. The size of the particle 2 can then be determined as described above.

The flow component of the distance moved by the particle 2 may be determined from the flow velocity of the sample and the time elapsed between the current frame 1a and the subsequent frame 1b. The time elapsed between the current frame 1a and the subsequent frame 1b will be known from the frame rate of the camera used to capture the video. The flow velocity of the sample may be determined from the average distance travelled by the particles within the sample over a plurality of subsequent frames of the video, as determined from 2-dimensional tracking of the particles, and the time elapsed over the subsequent frames.

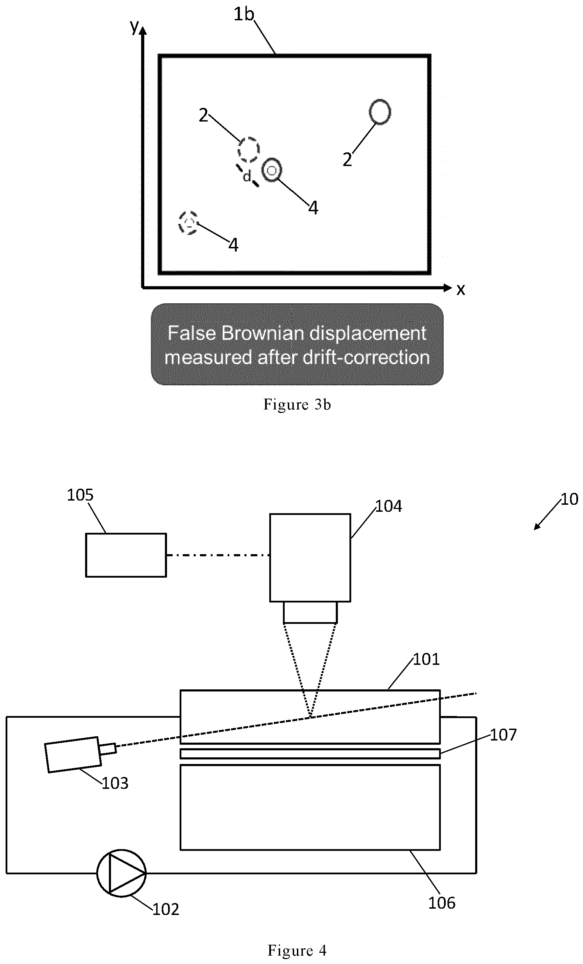

Figures 3a and 3b illustrate how errors can be introduced when 2-dimensional tracking is used in NTA and a flow is introduced into a sample. In the example of Figures 3a and 3b, the flow rate of the sample is relatively high, for example (i.e. the flow is high enough to cause errors in tracking of particles due to the flow).

Figure 3a shows a current frame 1a of a video and a subsequent frame 1b of the video. A first particle 2 and a second particle 4 are shown in the current frame 1a and in the subsequent frame 1b. The position of the particles 2, 4 in the current frame 1a is shown in the subsequent frame 1b using a broken line. In this example, the Euclidean nearest particle to the position of the first particle 2 in the current frame 1a in the subsequent frame 1b within a tracking distance limit 3 is the second particle 4. Therefore, the incorrect particle is identified as the first particle 2 in the subsequent frame 1b if 2-dimensional tracking is used. This then introduces an error in the calculation of the distance moved by the first particle 2 due to Brownian motion as described above. This error in the distance calculation ultimately introduces an error in the calculation of the size of the first particle 2 and hence the particle size distribution of the sample. Figure 3b illustrates an incorrect correction of the position of the second particle 4 in the subsequent frame 1b, after the second particle 4 has been incorrectly identified as the first particle 2, and the subsequent incorrect calculation of the distance travelled by the first particle 2.

Figure 4 shows an apparatus 10 for characterising particles using nanoparticle tracking analysis (NTA) according to an embodiment of the invention. The apparatus 10 comprises: a flow cell 101 for containing a sample comprising a plurality of particles suspended in a fluid; a pump 102 configured to provide a flow of the sample through the flow cell 101; a light source 103 configured to illuminate the sample; an imaging system 104 configured to collect light scattered or fluoresced by particles moving within the flow cell 101 and within a detection region of the imaging system 104, and capture a video of the particles moving within the detection region; and a computer 105 configured to process the video. The computer 105 is configured to determine an estimated flow velocity of the sample through the flow cell 101. Determining an estimated flow velocity of the sample through the flow cell 101 comprises performing 1-dimensional particle tracking in a direction perpendicular to an expected flow direction of the sample.

The imaging system comprises a microscope and a camera configured to capture the video through the microscope. The microscope may, for example comprise a 20x magnification and the camera comprise a charge-coupled device. The light source may be a laser. In other embodiments, any suitable alternative imaging system and/or light source may be used.

The apparatus further comprises a glass chamber 106 and a metalized surface 107 arranged between the glass chamber 106 and the flow cell 101. The metalized surface is arranged to reflect light scattered or fluoresced from the particles back towards the imaging system 104, thereby increasing particle contrast. The glass chamber may comprise a prism configured to refract light from the light source 103 to form a thin sheet of light substantially parallel to the metalized surface 107.

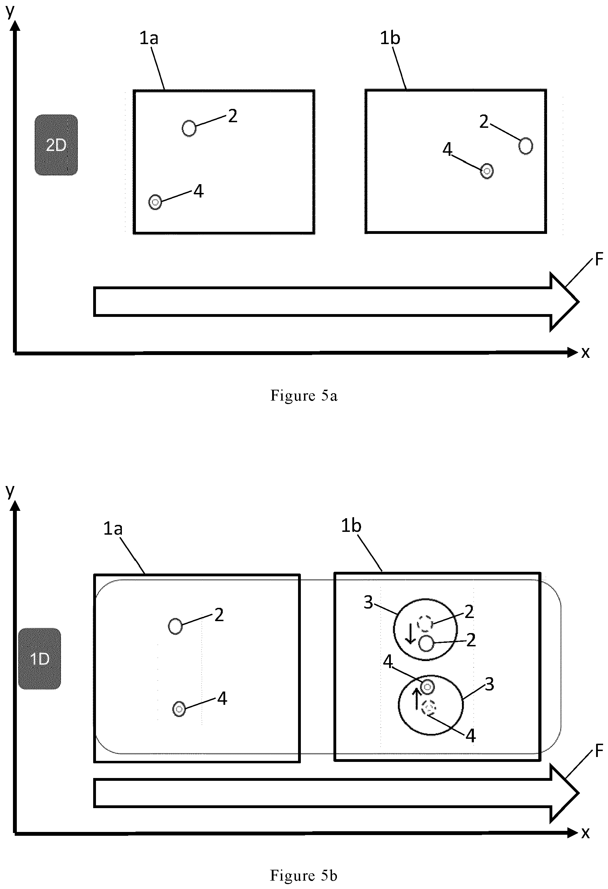

Figures 5a and 5b illustrates how 1-dimensional particle tracking in a direction perpendicular to an expected flow direction of a sample is performed in accordance with embodiments of the invention. Figures 5a and 5b each show a current frame 1a of a video and a subsequent frame 1b of the video. A first particle 2 and a second particle 4 are shown in the current frame 1a and in the subsequent frame 1b. The expected direction of flow of the sample is illustrated by the arrow labelled 'F'. As illustrated by the axes in Figures 5a and 5b, the expected flow of the sample is parallel to the x-axis. In Figure 5b, the position of the first particle 2 relative to the second particle 4 in the current frame 1a is shown in the dimension parallel to the y-axis only.

In Figure 5b, the position of the particles 2, 4 in the current frame 1a are shown in the subsequent frame 1b using a broken line. Identifying the particles 2, 4 in the subsequent frame 1b comprises identifying the nearest particle in the subsequent frame 1b in a tracking direction. The tracking direction is a direction parallel to the y-axis, i.e. a direction perpendicular to the direction of flow of the sample. In some embodiments a tracking distance limit may be used, so that the first particle 2 is identified in the subsequent frame 1b as the nearest particle, within a tracking distance limit 3, to the position of the first particle 2 in the current frame 1a in a direction parallel to the y-axis. The tracking distance limit may be determined with reference to an expected maximum movement distance of the particle, and is optional.

The second particle 4 is identified in the subsequent frame 1b as the nearest particle, within a tracking distance limit 3, to the position of the second particle 4 in the current frame 1a in a direction parallel to the y-axis. As shown in Figure 5, the correct particles 2, 4 have been identified in the subsequent frame 1b.

In accordance with embodiments of the invention, an estimated flow velocity of a sample is determined from an average distance that particles within the sample, tracked by the 1-dimensional particle tracking described above with reference to Figure 5, move between subsequent frames of a video. Following the 1-dimensional particle tracking, the displacement (in two dimensions) of each particle between subsequent frames of the video is measured. The median displacement of all the particles and the time elapsed across the frames of the video is used to estimate the flow velocity of the sample. In other embodiments, a different average of the distance may be used, such as the mean.

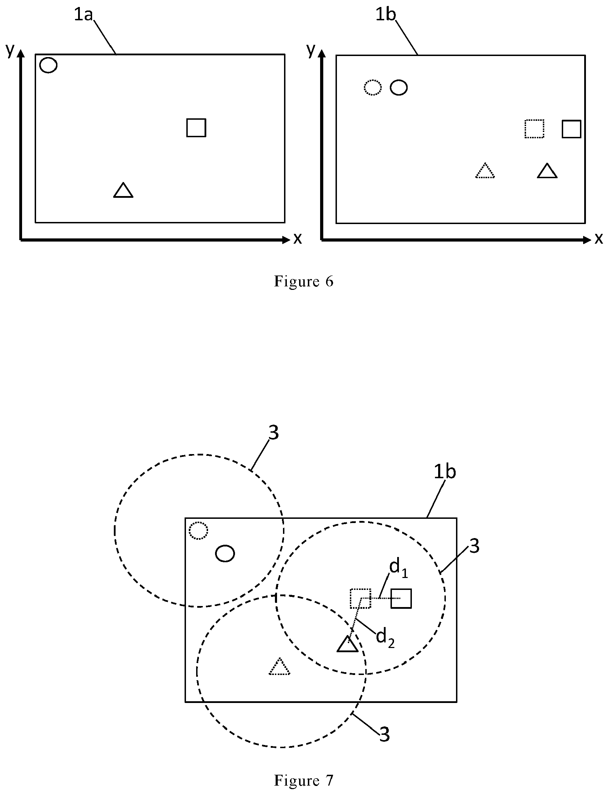

After the estimated flow velocity of the sample has been obtained, corrected positions of the particles within each frame of the video are determined in which the estimated flow velocity component of movement of the particles is removed. Figure 6 illustrates how corrected positions of particles within a frame of a video are determined in which the estimated flow velocity component of movement of the particles is removed. Figure 6 shows a current frame 1a of a video and a subsequent frame 1b of the video. The position of three particles, represented by a circle, a square and a triangle respectively, are shown in the current frame 1a. The position of the three particles, as determined by the 1-dimensional tracking described above, is shown in the subsequent frame 1b. The corrected positions of the particles in the subsequent frame 1b are shown using a broken line. In Figure 6, the expected direction of flow of the sample is parallel to the x-axis. The corrected positions of the particles are determined by determining the flow component of the distance moved by the particles from the current frame 1a to the subsequent frame 1b and subtracting this component from the position of the particles in the subsequent frame 1b in the x-direction. The flow component of the distance moved by the particles is determined using the estimated flow velocity of the sample and the time elapsed between the current frame 1a to the subsequent frame 1b.

After the corrected positions of the particles within each frame of the video are determined, 2-dimensional particle tracking of the corrected positions of the particles is performed. This is illustrated in Figure 7. Figure 7 shows the positions of the particles within the subsequent frame 1b of Figure 6. The position of the particles in the current frame 1a of Figure 6 is shown in the subsequent frame 1b in Figure 7 using a broken line. The particles are identified in the subsequent frame 1b as the Euclidean nearest particle to the position of the respective particle in the current frame 1a within a tracking distance limit 3. The tracking limit 3 may be determined in response to movements of the particles tracked by the 1-dimensional tracking after correction to remove the estimated flow velocity.

During the 2-dimensional tracking, more than one particle may be identified within the tracking distance limit. For example, as illustrated in Figure 7, two particles are identified in the subsequent frame 1b within the tracking distance limit 3 from the particle represented by a square. The Euclidean distance d₁, d₂ is measured between the position of the particle represented by a square in the current frame 1a and the two particles identified in the subsequent frame 1b. The distance d₁ is less than the distance d₂, and so the particle that is the distance d₁ from the position of the particle represented by a square in the current frame 1a is identified as the particle represented by a square in the subsequent frame 1b. In the example of Figure 7, this has resulted in the correct particle being identified in the subsequent frame 1b as shown.

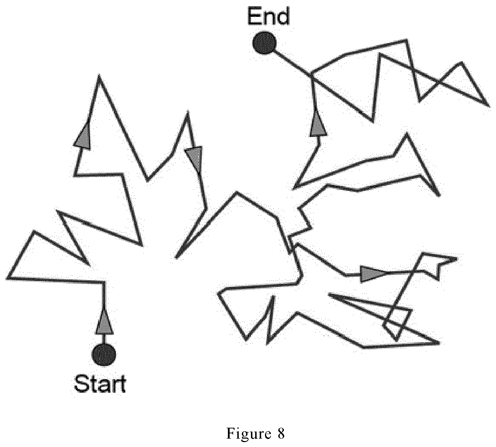

After the 2-dimensional tracking is performed, a residual flow velocity from an average distance that particles tracked by the 2-dimensional particle tracking move between subsequent frames of the video is determined. The residual flow velocity is determined using the average distance and the time elapsed across the subsequent frames of the video. A residual-corrected track for each particle is then determined by correcting the 2-dimensional particle tracking to remove the residual flow velocity. An example of a residual-corrected track of a particle is shown in Figure 8. The track illustrates the movement of a particle through a sample from a start position in a first frame of a video, across subsequent frames of the video, and to an end position in a final frame of the video. A size of each particle may then be determined from an average distance that particles move between subsequent frames of the video obtained from the residual-corrected tracks using the Stokes-Einstein equation as described above.

Table 1 below shows average motion components of the total distance moved by particles within a test sample. As already discussed, the average motion of particles should represent an estimate of the flow velocity, since Brownian movement is random and the average of random movement is zero.

The first column ('2D tracking only') contains average motion components (or flow velocity estimates) as determined using known 2-dimensional tracking, as described above with reference to Figures 2a to 3b. The second column ('1D/2D tracking') contains: estimated flow velocity determined using 1-dimensional tracking (ID); and the sum of the estimated flow velocity from 1-dimensional tracking and the residual flow velocity determined using 2-dimensional tracking of corrected particle positions (2D), as described above with reference to Figures 5 to 8. The test sample comprised 100nm polystyrene latex particles under a flow velocity of about-140pixels per frame. This flow speed is about 15 times the typical Brownian displacements of the particles.

**Table 1: Drift estimates for -140pix/fr flow**

| **2D tracking only** | **1D/2D tracking** |
|---|---|
| 13 | -137/-137 |
| 4 | -139/-140 |
| 9 | -136/-137 |

As shown in Table 1, the average motion components obtained using techniques according to embodiments of the invention are far more accurate than average motion components obtained using known techniques.

## Claims

1. An apparatus for characterising particles using nanoparticle tracking analysis, comprising:
a flow cell for containing a sample comprising a plurality of particles suspended in a fluid;
a pump configured to provide a flow of the sample through the flow cell;
a light source configured to illuminate the sample;
an imaging system configured to collect light scattered or fluoresced by particles moving within the flow cell and within a detection region of the imaging system and capture a video of the particles moving within the detection region; and
a computer configured to process the video to determine an estimated flow velocity of the sample through the flow cell, wherein determining the estimated flow velocity of the sample comprises performing 1-dimensional particle tracking in a direction perpendicular to an expected flow direction of the sample.

2. The apparatus of claim 1, wherein the 1-dimensional particle tracking comprises identifying a particle from a current frame of the video in a subsequent frame of the video.

3. The apparatus of claim 2, wherein identifying the particle in the subsequent frame of the video comprises identifying the nearest particle in the subsequent frame in a tracking direction.

4. The apparatus of claim 3, wherein identifying the nearest particle in the subsequent frame comprises identifying the nearest particle within a 1-dimensional tracking distance limit.

5. The apparatus of any preceding claim, wherein the estimated flow velocity is determined from an average distance that one or more particle tracked by the 1-dimensional particle tracking move between subsequent frames of the video.

6. The apparatus of claim 5, wherein the average distance is the median distance.

7. The apparatus of any preceding claim, wherein the computer is configured to:
use the estimated flow velocity to determine corrected positions of particles in which the estimated flow velocity component of movement of the particles is removed;
perform 2-dimensional particle tracking of the corrected positions of the particles; and
determine a residual flow velocity from an average distance that particles tracked by the 2-dimensional particle tracking of the corrected positions move between subsequent frames of the video.

8. The apparatus of claim 7, wherein the computer is configured to determine a residual-corrected track for each particle, comprising correcting the 2-dimensional particle tracking of the corrected positions of the particles to remove the residual flow velocity.

9. The apparatus of claim 8, wherein the computer is configured to determine particle size for each particle from an average distance that the particle moves between subsequent frames of the video obtained from the residual-corrected tracks.

10. The apparatus of claim 9, wherein the computer is configured to: determine the mean squared displacement of each particle from the average distance that the particle moves between subsequent frames of the video obtained from the residual-corrected tracks, determine the diffusion coefficient of each particle from the mean squared displacement, and determine particle size for each particle from the diffusion coefficient using the Stokes-Einstein equation.

11. The apparatus of any of claims 7 to 10, wherein the 2-dimensional particle tracking of the corrected positions comprises identifying a particle from a current frame of the video in a subsequent frame of the video, comprising identifying the nearest particle in the subsequent frame within a 2-dimensional tracking distance limit.

12. The apparatus of claim 11, wherein the 2-dimensional tracking distance limit is determined responsive to movements of the particles tracked by the 1-dimensional particle tracking.

13. The apparatus of any preceding claim, wherein the computer is configured to produce a measurement warning if the estimated flow velocity exceeds a predetermined threshold; and/or wherein the computer is configured to determine a particle concentration of the sample and produce a measurement warning if the particle concentration exceeds a predetermined threshold.

14. The apparatus of any preceding claim, wherein the 1-dimensional particle tracking is carried out on stored video after the video has been captured, or as the video is being captured.

15. A method for determining an estimated flow velocity of a sample during a nanoparticle tracking analysis, comprising:
providing a flow of the sample through a flow cell, the sample comprising a plurality of particles suspended in a fluid;
illuminating the sample with a light source;
collecting light scattered or fluoresced by particles moving within the flow cell and within a detection region of an imaging system;
capturing a video of the particles moving within the detection region; and
processing the video to determine an estimated flow velocity of the sample through the flow cell, comprising performing 1-dimensional particle tracking in a direction perpendicular to an expected flow direction of the sample.
